# EUROPEAN PATENT SPECIFICATION

(11) **EP 2 897 871 B1**
(45) Date of publication and mention of the grant of the patent: **20.02.2019**
(21) Application number: 13802711.5
(22) Date of filing: 20.09.2013
(51) Int. Cl.: B65B 55/12, A23L 3/00, A23L 3/16, G05D 23/13, A23L 19/00

(54) **METHODS AND SYSTEMS FOR COORDINATION OF ASEPTIC STERILIZATION AND ASEPTIC PACKAGE FILLING RATE**
VERFAHREN UND SYSTEME ZUR KOORDINATION EINER ASEPTISCHEN STERILISIERUNG UND DER FÜLLRATE EINER ASEPTISCHEN PACKUNG
PROCÉDÉS ET SYSTÈMES DE COORDINATION DE LA STÉRILISATION ASEPTIQUE ET DE LA VITESSE DE REMPLISSAGE ASEPTIQUE DE CONDITIONNEMENTS

(30) Priority: 24.09.2012 US 201261704709 P; 19.11.2012 US 201261728119 P
(43) Date of publication of application: 29.07.2015
(73) Proprietor: Nestec S.A., 1800 Vevey (CH)
(72) Inventor: CUMMINGS, Daniel Louis, Fremont, Michigan 49412 (US)
(74) Representative: Rupp, Christian
(86) International application number: PCT/IB2013/058703
(87) International publication number: WO 2014/045238

(56) References cited:
- EP-A1- 0 221 415
- EP-A1- 0 229 995
- US-A- 5 941 417

## Description

### BACKGROUND

The present disclosure relates generally to sterilization and package filling. More specifically, the present disclosure relates to methods of coordination of aseptic sterilization production rate with aseptic package filling rate. The methods and systems include averaging level control schemes for automatically balancing sterilization flowrate and package filling rate.

EP-A-221 415 discloses a system and a method for sterilising and filling a liquid product in a continuous process. A tank is provided between a sterilizer and a filler. The level in the tank is monitored and the product flow to the tank is varied in accordance to the level in order to keep an optimum level in the tank.

Packaging food may involve aseptic sterilization as well as aseptic package filling. An aseptic sterilizer is a continuous flow process, whereas package filling machines are discrete devices which stop routinely for a variety of reasons. Stopping an aseptic sterilizer is an event which has significant operational and economic consequences. It is necessary to manage the rate of aseptic sterilizer flow as compared to package filling in order to prevent the aseptic sterilizer from needing to stop.

Accordingly, it is desirable to actively manage the balance between the sterilizer flow rate and aseptic package filling rate to reduce the risk of stoppage and to allow additional time to repair or restart a stopped package filling machine.

### SUMMARY

According to the invention a method of Claim 1 and a system of Claim 14 are provided.

In an embodiment, the food manufacturing process comprises aseptic sterilization of a food product. The aseptic sterilization may include an aseptic sterilizer and a buffer tank. In an embodiment, only one buffer tank may be used.

In an embodiment, the food manufacturing process comprises package filling. The package filling may be aseptic package filling.

In an embodiment, the food manufacturing process comprises a speed indicating controller. The speed indicating controller may control a flow rate of the food product.

In an embodiment, the food manufacturing process comprises a level indicating controller.

In an embodiment, the level of the food product in the buffer tank is measured. The level may be measured by a characteristic of the food product selected from the group consisting of weight, depth, volume, pressure, differential pressure, or combinations thereof. In an embodiment, the level is measured by weight. The level may also be measured through instrumentation methods selected from the group consisting of ultrasonics, radar, load cells or combinations thereof. In an embodiment, the level is measured through ultrasonics. In an embodiment, the level is measured through load cells.

In an embodiment, the averaging level control scheme comprises setting a target flow rate for continuous product production for the food manufacturing process.

In an embodiment, the target flow rate is changed based on a package filling rate.

In another embodiment, a method of balancing continuous food product production with package filling is provided. The method includes setting a target flow rate for a continuous food product production system comprising a buffer tank and a controller, setting a maximum level for a product in the buffer tank, measuring the level of the product in the buffer tank, and triggering the controller to lower the target flow rate when the measured level rises above the set maximum level.

In an embodiment, the continuous food product production system comprises a product supply tank.

In an embodiment, the continuous food product production system comprises only one controller.

In an embodiment, the continuous food product production system comprises only one buffer tank.

In an embodiment, the controller measures and controls a flow rate of the continuous food product production.

In an embodiment, the controller measures and controls the level of the product in the buffer tank.

In an embodiment, the controller controls a pump that pumps a product supply into the continuous food product production system. The pump may be a variable speed pump.

In an embodiment, the maximum set level of the product in the buffer tank is set at one-third full. It may be set at half full, or three-quarters full.

In an embodiment, the level of the product in the buffer tank is measured. The level may be measured by a characteristic of the product selected from the group consisting of weight, depth, volume, pressure, differential pressure, or combinations thereof. In an embodiment, the level is measured by weight. The level may also be measured through instrumentation methods selected from the group consisting of ultrasonics, radar, load cells, or combinations thereof. In an embodiment, the level is measured through ultrasonics. In an embodiment, the level is measured through load cells.

In an embodiment, method further comprises using a level indicating controller to trigger the controller to lower the target flow rate.

In an embodiment, the continuous food product production system comprises aseptic sterilization.

In an embodiment, the package filling machine is an aseptic package filling machine.

In an embodiment, the food product is a baby food product.

In another embodiment, a method of producing aseptically packaged products is provided. The method includes aseptically sterilizing a product using a sterilization system, filling packages with the product using a package filling machine, and coordinating a rate of aseptic sterilization of the product with a rate of aseptic package filling.

In an embodiment, the sterilization system comprises an aseptic sterilizer and a buffer tank.

In an embodiment, the product is kept in a product supply tank prior to entering the sterilization system.

In an embodiment, the product is pumped out of the product supply tank to the aseptic sterilizer using a variable speed pump.

In an embodiment, only one buffer tank is used.

In an embodiment, coordinating a rate of aseptic sterilization of the product with a rate of aseptic package filling is done by using an averaging level control scheme.

In an embodiment, the package filling machine is an aseptic package filling machine.

In an embodiment, a target flow rate is set for the aseptic sterilization of the product based on a product level in the buffer tank.

In an embodiment, the level of the product in the buffer tank is measured. The level may be measured by a characteristic of the product selected from the group consisting of weight, depth, volume, pressure, differential pressure, or combinations thereof. In an embodiment, the level is measured by weight. The level may also be measured through instrumentation methods selected from the group consisting of ultrasonics, radar, load cells, or combinations thereof. In an embodiment, the level is measured through ultrasonics. In an embodiment, the level is measured through load cells.

In an embodiment, the product is a food product. The product may be a baby food product.

In yet another embodiment, a method of controlling a target flow rate for a sterile packaging system is provided. The method includes measuring a level of a product in a buffer tank set between a sterilizer running at a set flow rate and a product package filling machine, and causing the level of the product in the buffer tank to rise, triggering a controller to lower the set flow rate for the sterilizer.

In an embodiment, the product is a food product. The product may be a baby food product.

In an embodiment, the triggering of the controller to lower the set flow rate for the sterilizer is caused by a signal from an indicator of the level of the product in the buffer tank.

In an embodiment, the level of the product in the buffer tank is measured. The level may be measured by a characteristic of the product selected from the group consisting of weight, depth, volume, pressure, differential pressure, or combinations thereof. In an embodiment, the level is measured by weight. The level may also be measured through instrumentation methods selected from the group consisting of ultrasonics, radar, load cells, or combinations thereof. In an embodiment, the level is measured through ultrasonics. In an embodiment, the level is measured through load cells.

In an embodiment, the maximum level that the product in the buffer tank can rise to before triggering a controller to lower the set flow rate is selected from the group consisting of one-third full, half full, and three-quarters full.

In an embodiment, the method further comprises providing additional time to repair or restart the product package filling machine.

In still yet another embodiment, a method of preventing aseptic sterilizer stoppage during an aseptic package filling process is provided. The method includes providing a product in a product supply tank, a speed indicating controller placed relative to a pump, an aseptic sterilizer, a buffer tank, a level indicating controller relative to the buffer tank, and a package filling machine. The method also includes pumping the product from the product supply tank through the aseptic sterilizer, the buffer tank, and into the package filling machine, measuring a product supply flow rate from the product supply tank, measuring the product level in the buffer tank, and adjusting a rate of flow of the product from the supply tank to the aseptic sterilizer and buffer tank based on measurements of the product supply flow rate and the product level in the buffer tank.

In an embodiment, the product is a food product. The product may be a baby food product.

In an embodiment, the pump is a variable speed pump.

In an embodiment, only one buffer tank is provided.

In an embodiment, the product level in the buffer tank is measured.

In an embodiment, the product level in the buffer tank is measured and controlled using the level indicating controller.

In an embodiment, the level of the product in the buffer tank is measured. The level may be measured by a characteristic of the product selected from the group consisting of weight, depth, volume, pressure, differential pressure, or combinations thereof. In an embodiment, the level is measured by weight. The level may also be measured through instrumentation methods selected from the group consisting of ultrasonics, radar, load cells, or combinations thereof. In an embodiment, the level is measured through ultrasonics. In an embodiment, the level is measured through load cells.

In an embodiment, the rate of flow of the product from the supply tank to the aseptic sterilizer and buffer tank is measured and controlled by the speed indicating controller.

In an embodiment, the speed indicating controller controls the speed of the pump.

In an embodiment, the speed indicating controller receives a signal from the level indicating controller.

In an embodiment, the level indicating controller signals the speed indicating controller to lower the rate of flow of the product from the supply tank when the level in the buffer tank rises above a set point.

In an embodiment, the set point is the product filling the buffer tank over halfway full. It may be set at half full, or three-quarters full.

In an embodiment, the package filling machine stops and the aseptic sterilizer continues to run.

In yet another embodiment, a food manufacturing system is provided. The system includes a product supply, a machine for continuous product production comprising a variable speed pump, a buffer tank, a level indicating controller that measures product level in the buffer tank, a speed indicating controller responsive to the level indicating controller, and a package filling machine that when stopped causes the product level in the buffer tank to rise, causing the speed indicating controller to change a speed of the variable speed pump.

In an embodiment, the product is a baby food product. The product may be a pureed food.

In an embodiment, the system comprises a product supply tank.

In an embodiment, the continuous product production comprises aseptic sterilization

In an embodiment, the product level is measured by a characteristic of the product selected from the group consisting of weight, depth, volume, pressure, differential pressure, or combinations thereof. In an embodiment the product level is measured by weight. The product level may also be measured through instrumentation methods selected from the group consisting of ultrasonics, radar, load cells, or combinations thereof. In an embodiment, the product level is measured through ultrasonics. In an embodiment, the level is measured through load cells.

In an embodiment, the system comprises only one buffer tank.

In an embodiment, the level indicating controller signals the speed indicating controller to lower the speed of the variable speed pump when the product level in the buffer tank rises above a set point.

In an embodiment, the set point is the product level in the buffer tank rising to half full. It may also be the product level in the buffer tank rising to one-third full, or three-quarters full.

In an embodiment, the package filling machine can be stopped while the aseptic sterilizer continues to run.

In an embodiment, a flow rate of the continuous product production is coordinated with a rate of package filling.

In an embodiment, the system comprises an averaging level control scheme.

An advantage of the present disclosure is to provide a method of preventing stoppage of a continuous flow process.

Another advantage of the present disclosure is to prevent stoppage of an aseptic sterilizer when a package filling machine stops.

Yet another advantage of the present disclosure is to provide additional time for repair or restart of a package filling machine before it becomes necessary to shut down an upstream aseptic sterilizer.

Still yet another advantage of the present disclosure is to prevent significant operational and economic consequences from accruing due to a stoppage of an aseptic sterilization or other continuous product production process.

A yet further advantage of the present disclosure is to provide a comparatively inexpensive method of maintaining continuous production or sterilization even when package filling stops and restarts.

Additional features and advantages are described herein, and will be apparent from the following Detailed Description and Figure.

### BRIEF DESCRIPTION OF THE FIGURE

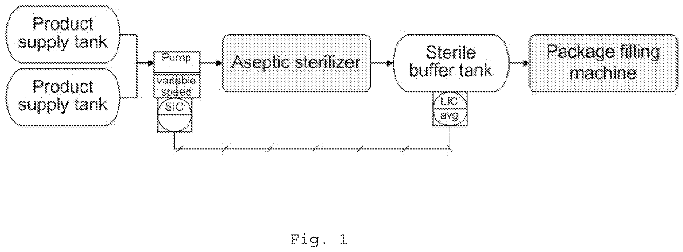

Fig. 1 illustrates a schematic representation of the averaging level control scheme for coordinating aseptic sterilization with aseptic package filling in accordance with an embodiment of the present disclosure.

### DETAILED DESCRIPTION

As used herein, the singular forms "a," "an" and "the" include plural referents unless the context clearly dictates otherwise. Thus, for example, reference to "a polypeptide" includes a mixture of two or more polypeptides and the like.

As used herein, "about" is understood to refer to numbers in a range of numerals. Moreover, all numerical ranges herein should be understood to include all integer, whole or fractions, within the range.

Food manufacturing processes often include sterilization processes of the food product. These processes include aseptic sterilization before filling a food product into aseptic packaging. The skilled artisan will appreciate that sterilization processes may occur at various points throughout a food manufacturing process.

Sterilization is necessary for a variety of reasons. For example, in order to produce high-quality, safe, shelf-stable foods, the foods must be sterilized prior to packaging (e.g., ultra-high temperature/aseptic processes, in-container sterilization, etc.). The product should be properly sterilized to make sure that it is safe for consumption, but, at the same time, it should not be over-cooked or over-processed. Proper sterilization is thus an important step in the food manufacturing process.

Aseptic sterilization uses an aseptic sterilizer in a continuous flow process. Stopping an aseptic sterilizer during food production has serious adverse effects, including both operational and economic consequences. The skilled artisan will appreciate that this is because sterility must be maintained and/or reconfirmed before the sterilizer can again start producing usable product. This could require a sterile water flush, hot water sterilization, steam sterilization, or a complete clean-in-place cycle. All these options would cause a loss of hours of production time, costing the manufacturer time, labor, and money.

Aseptic sterilization occurs before food products are deposited into packages. Package filling machines, unlike aseptic sterilizers, are not continuous flow processes and instead are discrete devices that stop routinely for a variety of reasons. When these machines stop, a backup in production will occur, forcing the aseptic sterilizer to stop as well. To prevent the aseptic sterilizer or other continuous production from stoppage, typically there is a sterile product buffer tank located between the sterilizer and the filling machine to allow the sterilizer to operate for some time while the filling machine is stopped. However, the use of a buffer tank does not solve the problem entirely. If the stoppage of the package filling machine is of a long enough duration, the buffer tanks fills and the sterilizer will still be forced to stop.

Some manufacturers may use a series of buffer tanks to help mitigate the issue. The use of multiple buffer tanks may not be the most effective solution, as the same overfilling issue could occur with multiple buffer tanks. Also, purchasing multiple tanks is both redundant and expensive. Applicant has surprisingly discovered instead that an averaging level control scheme may be applied to aseptic sterilization and package filling in a food manufacturing process. The control scheme is able to coordinate aseptic sterilization production rate with aseptic package filling rate. Averaging level control schemes of any type have not been applied to continuous food product production involving aseptic sterilization as the typical processing line is designed for only a few products and is relatively inflexible due to a lack of instrumentation required to implement the control scheme. The presently disclosed methods provide a cheaper and more efficient alternative than a multiple buffer tank system and are adaptable to continuous food product production involving aseptic sterilization.

The skilled artisan will appreciate that the present disclosure may be applied to other continuous product productions paired with package filling. This control concept applies to any food manufacturing process that uses a buffer tank to balance continuous product production with package filling. In an embodiment, the control scheme is applied to aseptic sterilization and aseptic food packaging.

In an embodiment, the averaging level control scheme is applied to food manufacturing process that includes an aseptic sterilization process and an aseptic package filling process. In an embodiment, a product supply tank is employed. From the product supply tank, food product is pumped into an aseptic sterilizer. The pump is capable of operation at variable speed, able to send product quickly or slowly into the aseptic sterilizer. A speed indicating controller is also used to measure and respond the flow of the product into the aseptic sterilizer. The skilled artisan will appreciate that the controller can change the pump speed; varying the rate that product flows into the sterilizer.

In an embodiment, the speed indicating controller receives a signal from a level indicating controller, which acts as an averaging control on the system. The level indicating controller measures and responds to the level of the product in a buffer tank that is placed between the aseptic sterilizer and a package filling machine in an embodiment of the present disclosure.

As part of the averaging level control scheme, the target flow rate for the aseptic sterilizer is set based on the sterile product level in the buffer tank between the sterilizer and the package filling machine. Under normal conditions, the level in the buffer tank is approximately half full. If the filling machine stops, the level in the tank will rise. The level indicating controller will then signal the speed indicating controller to lower the target flow rate. The speed indicating controller then lowers the target flow rate for the sterilizer allowing more time to restart the filling machine.

The skilled artisan will appreciate that one controller may be used in the scheme, or more than one controller. If one controller is used, it may perform multiple functions. If multiple controllers are used, the controllers may be capable of signaling each other to perform different functions. In an embodiment, two controllers are used as part of averaging level control scheme.

In an embodiment, the buffer tank has a set point level for the volume of sterilized product that may be in the tank. If the level of the sterilized product in the tank rises above the set point level, the rise will trigger a controller to lower the flow rate of product into the aseptic sterilizer, in order to prevent the aseptic sterilizer from being forced to stop. The skilled artisan will appreciate that the set point that triggers the lowering of the target product flow rate may be set at any level that prevents overflow of the product in the buffer tank and the shutting down of the aseptic sterilizer. In an embodiment, the set point level is when the buffer tank is half full of the sterilized product. In an embodiment, the set point level is when the buffer tank is three-quarters full. In an embodiment, the set point level is when the buffer tank is one-third full.

The skilled artisan will appreciate that the level of the buffer tank can be measured in various ways such as weight, depth, differential pressure, ultrasonics, radar, load cells, or other instrumentation methods. In an embodiment, the level of the sterilized product in the buffer tank is measured by weight. In another, it is measured by differential pressure. In another embodiment, the level is measured by ultrasonics. In a further embodiment, the level is measured through load cells.

In an embodiment, the package filling machine employed as part of the food manufacturing process may need to stop for a variety of reasons. The machine may need repair, or it may need cleaning, or replacement of packaging material, or a multitude of other reasons that will be known to a skilled artisan. The averaging level control scheme actively manages the working volume in the buffer tank to allow more time for the sterilizer to continue operating while the filling machine is restarted.

The averaging level control scheme acts to automatically balance the production or sterilization flow rate with the package filling rate. The averaging level control scheme actively manages the balance between the aseptic sterilizer flow and package filling rates to allow more time to repair or restart a stopped filling machine.

The skilled artisan will appreciate that the methods and systems are not restricted to a certain type of food. Any appropriate food product may be manufactured using an averaging level control scheme to balance the rates of the continuous flow processes with steps that require occasional stoppage. In an embodiment, the methods and systems are applied to the manufacture of baby food. The method may be used for whole foods or pureed foods or otherwise prepared foods. The methods may also be used for food for adults. The methods may be extended beyond pure food products as well. In an embodiment, the methods and processes are employed by pharmaceutical or nutraceutical manufacturers as well.

By way of example and not limitation, the following example is illustrative of an embodiment of the present disclosure. The formulations and processes below are provided for exemplification only, and they can be modified by the skilled artisan to the necessary extent, depending on the special features that are desired.

Fig. 1 illustrates a schematic manufacturing line, demonstrating the implementation of the averaging level control scheme incorporated into the food manufacturing process.

As illustrated in Fig. 1, in an embodiment, the methods include a food manufacturing system including an aseptic sterilization process. The aseptic sterilization process uses an aseptic sterilizer and is a continuous flow process. The food product is initially placed in a product supply tank and subsequently pumped into the aseptic sterilizer. The pump is capable of acting at variable speeds, set and measured by a speed indicating controller. The speed indicating controller is part of an averaging level control scheme to prevent the aseptic sterilizer from forced stoppage due to stoppage of a package filling machine.

As seen in Fig. 1, a buffer tank is set between the continuous flow aseptic sterilizer and the package filling machine. The buffer tank has a set point with a level indicating controller that is triggered when product level in the buffer tank rises above the set point. This occurs, for example, if the package filling machine stops, generating a backlog in the process. In that case, the level indicating controller signals the speed indicating controller to slow the pump speed and thus the flow rate of the aseptic sterilization process, averaging out the system speed and preventing a need to shut down the aseptic sterilizer merely because of a stoppage of the package filling machine.

## Claims

1. A method of balancing a continuous product production flow rate with a package filling rate, the method comprising:
applying an averaging level control scheme to a food manufacturing process, wherein the food manufacturing process comprises package filling and aseptic sterilization of a food product;
the averaging level control scheme comprising:
setting a target flow rate for a continuous food product production system comprising a buffer tank and a controller;
setting a maximum level for a product in the buffer tank;
measuring a level of the product in the buffer tank; and
triggering the controller to lower the target flow rate when the measured level rises above the set maximum level. **characterized in that** continuous production and sterilization is maintained even when package filling stops and restarts.

2. The method according to Claim 1, wherein the package filling is aseptic package filling.

3. The method according to any one of Claims 1 and Claim 2, wherein the food manufacturing process comprises a speed indicating controller.

4. The method according to Claim 3, wherein the speed indicating controller controls a flow rate of the food product.

5. The method according to any one of Claims 1 to Claim 4, wherein the food manufacturing process comprises a buffer tank and a level indicating controller, wherein the level of the food product in the buffer tank is measured.

6. The method according to Claim 5, wherein the level is measured by a characteristic of the food product selected from the group consisting of weight, depth, volume, pressure, differential pressure, and combinations thereof.

7. The method according to Claim 5, wherein the level is measured through instrumentation methods selected from the group consisting of ultrasonics, radar, load cells, and combinations thereof.

8. The method according to Claim 1, wherein the controller controls a pump that pumps a product supply into the continuous food product production system.

9. The method according to Claim 1, wherein the controller controls a variable speed pump that pumps a product supply into the continuous food product production system.

10. The method according to Claim 1, wherein the averaging level control scheme comprises:
aseptically sterilizing a product using a sterilization system;
filling packages with the product using a package filling machine; and
coordinating a rate of aseptic sterilization of the product with a rate of aseptic package filling.

11. The method according to any one of Claims 1 to Claim 10, wherein the product is a baby food product.

12. The method according to any one of Claims 1 to Claim 10, wherein the product is a pureed food.

13. The method according to Claim 1, wherein the method prevents aseptic sterilizer stoppage during an aseptic package filling process by adjusting a rate of flow of the product from at least one supply tank to at least one aseptic sterilizer and at least one buffer tank based on measurements of a product supply flow rate and a product level in the at least one buffer tank.

14. A food manufacturing system comprising:
a product supply;
a machine for continuous product production comprising a variable speed pump;
a buffer tank;
an aseptic sterilizer for aseptic sterilization of a food product;
a level indicating controller that measures product level in the buffer tank;
a speed indicating controller responsive to the level indicating controller; and
a package filling machine that when stopped causes the product level in the buffer tank to rise, causing the speed indicating controller to change a speed of the variable speed pump so that the continuous production and sterilization can be maintained even when the package filling machine is stopped and restarted;
and an averaging level control scheme adapted to carry out the method of any of claims 1 to 13.

## Patentansprüche

1. Verfahren zum Ausgleichen einer kontinuierlichen Produktherstellungsdurchflussrate mit einer Packungsfüllrate, wobei das Verfahren Folgendes umfasst:
Anwenden eines Durchschnittsfüllstandsteuerungsschemas auf einen Nahrungsmittelherstellungsprozess, wobei der Nahrungsmittelherstellungsprozess Packungsfüllen und aseptische Sterilisation eines Nahrungsmittelprodukts umfasst;
wobei das Durchschnittsfüllstandsteuerungsschema Folgendes umfasst:
Einstellen einer Zieldurchflussrate für ein kontinuierliches Nahrungsmittelprodukt-Produktionssystem, das einen Pufferbehälter und eine Steuerung umfasst;
Einstellen eines maximalen Füllstands für ein Produkt in dem Pufferbehälter;
Messen eines Füllstands des Produkts in dem Pufferbehälter und
Auslösen der Steuerung, um die Zieldurchflussrate zu senken, wenn der gemessene Füllstand über den eingestellten maximalen Füllstand ansteigt,
**dadurch gekennzeichnet, dass**
eine kontinuierliche Herstellung und Sterilisation selbst dann aufrechterhalten wird, wenn die Packungsfüllung stoppt und erneut startet.

2. Verfahren nach Anspruch 1, wobei die Packungsfüllung eine aseptische Packungsfüllung ist.

3. Verfahren nach einem von Anspruch 1 und Anspruch 2, wobei der Nahrungsmittelherstellungsprozess eine Geschwindigkeitsanzeigesteuerung umfasst.

4. Verfahren nach Anspruch 3, wobei die Geschwindigkeitsanzeigesteuerung eine Flussrate des Nahrungsmittelprodukts steuert.

5. Verfahren nach einem der Ansprüche 1 bis 4, wobei der Nahrungsmittelherstellungsprozess einen Pufferbehälter und eine Füllstandsanzeigesteuerung umfasst, wobei der Füllstand des Nahrungsmittelprodukts in dem Pufferbehälter gemessen wird.

6. Verfahren nach Anspruch 5, wobei der Füllstand durch eine Eigenschaft des Nahrungsmittelprodukts, ausgewählt aus der Gruppe, bestehend aus Gewicht, Tiefe, Volumen, Druck, Differenzdruck und Kombinationen davon, gemessen wird.

7. Verfahren nach Anspruch 5, wobei der Füllstand durch Instrumentierungsverfahren, ausgewählt aus der Gruppe, bestehend aus Ultraschall, Radar, Wägezellen und Kombinationen davon, gemessen wird.

8. Verfahren nach Anspruch 1, wobei die Steuerung eine Pumpe steuert, die eine Produktzufuhr in das kontinuierliche Nahrungsmittelprodukt-Produktionssystem pumpt.

9. Verfahren nach Anspruch 1, wobei die Steuerung eine Verstellpumpe steuert, die eine Produktzufuhr in das kontinuierliche Nahrungsmittelprodukt-Produktionssystem pumpt.

10. Verfahren nach Anspruch 1, wobei das Durchschnittsfüllstandsteuerungsschema Folgendes umfasst:
aseptisches Sterilisieren eines Produkts unter Verwendung eines Sterilisationssystems;
Befüllen von Packungen mit dem Produkt unter Verwendung einer Packungsfüllmaschine und
Koordinieren einer Rate der aseptischen Sterilisation des Produkts mit einer Rate der aseptischen Packungsfüllung.

11. Verfahren nach einem der Ansprüche 1 bis 10, wobei das Produkt ein Babynahrungsmittelprodukt ist.

12. Verfahren nach einem der Ansprüche 1 bis 10, wobei das Produkt ein püriertes Nahrungsmittel ist.

13. Verfahren nach Anspruch 1, wobei das Verfahren das Anhalten des aseptischen Sterilisators während eines aseptischen Packungsfüllprozesses verhindert, indem eine Flussrate des Produkts von mindestens einem Vorratsbehälter zu mindestens einem aseptischen Sterilisator und mindestens einem Pufferbehälter auf Basis von Messungen einer Produktzufuhrflussrate und eines Produktfüllstands in dem mindestens einen Pufferbehälter eingestellt wird.

14. Nahrungsmittelherstellungssystem, umfassend:
eine Produktzufuhr;
eine Maschine zur kontinuierlichen Produktherstellung umfassend eine Verstellpumpe;
einen Pufferbehälter;
einen aseptischen Sterilisator zur aseptischen Sterilisation eines Nahrungsmittelprodukts;
eine Füllstandsanzeigesteuerung, die den Produktfüllstand im Pufferbehälter misst;
eine Geschwindigkeitsanzeigesteuerung, die auf die Füllstandsanzeigesteuerung anspricht; und
eine Packungsfüllmaschine, die beim Anhalten bewirkt, dass der Produktfüllstand im Pufferbehälter ansteigt, wodurch die Geschwindigkeitsanzeigesteuerung eine Geschwindigkeit der Verstellpumpe so ändert, dass die kontinuierliche Herstellung und Sterilisation beibehalten werden kann, auch wenn die Packungsfüllmaschine angehalten und neu gestartet wird;
und ein Durchschnittsfüllstandsteuerungsschema, das zum Ausführen des Verfahrens nach einem der Ansprüche 1 bis 13 ausgelegt ist.

## Revendications

1. Procédé d'équilibrage d'un débit de production de produit en continu avec un taux de remplissage de conditionnements, le procédé comprenant :
l'application d'un programme de commande de niveau par calcul de moyenne à une opération de fabrication d'aliment, l'opération de fabrication d'aliment comprenant un remplissage de conditionnements et la stérilisation aseptique d'un produit alimentaire ;
le programme de commande de niveau par calcul de moyenne comprenant :
la définition d'un débit cible pour un système de production de produit alimentaire en continu comprenant un réservoir tampon et un module de commande ;
la définition d'un niveau maximal pour un produit dans le réservoir tampon ;
la mesure d'un niveau du produit dans le réservoir tampon ; et
le déclenchement du module de commande pour abaisser le débit cible lorsque le niveau mesuré augmente au-dessus du niveau maximal défini,
**caractérisé en ce que** :
la production continue et la stérilisation sont maintenues même lorsque le remplissage de conditionnements s'arrête et redémarre.

2. Procédé selon la revendication 1, dans lequel le remplissage de conditionnements est un remplissage de conditionnements aseptique.

3. Procédé selon l'une quelconque de la revendication 1 et de la revendication 2, dans lequel l'opération de fabrication d'aliment comprend un module de commande à indication de vitesse.

4. Procédé selon la revendication 3, dans lequel le module de commande à indication de vitesse commande un débit du produit alimentaire.

5. Procédé selon l'une quelconque de la revendication 1 à la revendication 4, dans lequel l'opération de fabrication d'aliment comprend un réservoir tampon et un module de commande à indication de niveau, le niveau du produit alimentaire dans le réservoir tampon étant mesuré.

6. Procédé selon la revendication 5, dans lequel le niveau est mesuré par une caractéristique du produit alimentaire choisie dans le groupe constitué par le poids, la profondeur, le volume, la pression, la pression différentielle et des combinaisons de ceux-ci.

7. Procédé selon la revendication 5, dans lequel le niveau est mesuré par des méthodes d'instrumentation choisies dans le groupe constitué par les ultrasons, le radar, les cellules de charge et des combinaisons de ceux-ci

8. Procédé selon la revendication 1, dans lequel le module de commande commande une pompe qui pompe une alimentation en produit dans le système de production de produit alimentaire en continu.

9. Procédé selon la revendication 1, dans lequel le module de commande commande une pompe à vitesse variable qui pompe une alimentation en produit dans le système de production de produit alimentaire en continu.

10. Procédé selon la revendication 1, dans lequel le programme de commande de niveau par calcul de moyenne comprend :
la stérilisation aseptique d'un produit en utilisant un système de stérilisation ;
le remplissage de conditionnements avec le produit en utilisant une machine de remplissage de conditionnements ; et
la coordination d'un taux de stérilisation aseptique du produit avec un taux de remplissage de conditionnements aseptique.

11. Procédé selon l'une quelconque de la revendication 1 à la revendication 10, dans lequel le produit est un produit alimentaire pour bébé.

12. Procédé selon l'une quelconque de la revendication 1 à la revendication 10, dans lequel le produit est un produit en purée.

13. Procédé selon la revendication 1, dans lequel le procédé empêche l'arrêt du stérilisateur aseptique pendant une opération de remplissage de conditionnements aseptique en réglant un débit d'écoulement du produit depuis au moins un réservoir d'alimentation vers au moins un stérilisateur aseptique et au moins un réservoir tampon sur la base de mesures d'un débit d'alimentation en produit et d'un niveau de produit dans ledit au moins un réservoir tampon.

14. Système de fabrication d'aliments comprenant :
une alimentation en produit ;
une machine de production de produit en continu comprenant une pompe à vitesse variable ;
un réservoir tampon ;
un stérilisateur aseptique pour la stérilisation aseptique d'un produit alimentaire ;
un module de commande à indication de niveau qui mesure un niveau de produit dans le réservoir tampon ;
un module de commande à indication de vitesse qui réagit au module de commande à indication de niveau ; et
une machine de remplissage de conditionnements qui, lorsqu'elle est arrêtée, amène le niveau de produit dans le réservoir tampon à monter, ce qui amène le module de commande à indication de vitesse à modifier une vitesse de la pompe à vitesse variable de sorte que la production continue et la stérilisation puissent être maintenues même lorsque la machine de remplissage de conditionnements est arrêtée et redémarrée ;
et un programme de commande de niveau par calcul de moyenne conçu pour exécuter le procédé selon l'une quelconque des revendications 1 à 13.
